# EUROPÄISCHE PATENTANMELDUNG

(11) **EP 4 364 563 A2**
(43) Veröffentlichungstag der Anmeldung: **08.05.2024**
(21) Anmeldenummer: 24159677.4
(22) Anmeldetag: 07.12.2017
(51) Int. Cl.: A01M 7/00

(54) **SPRÜHGERÄT**

(30) Priorität: 13.12.2016 EP 16203795; 16.01.2017 EP 17151595
(62) Teilanmeldung aus: 17821829.3
(71) Anmelder: Bayer CropScience AG, 40789 Monheim am Rhein (DE)
(72) Erfinder: Die Erfindernennung liegt noch nicht vor
(74) Vertreter: BIP Patents

(57) **Zusammenfassung**

Die vorliegende Erfindung betrifft eine Vorrichtung und ein Verfahren zur Applikation eines Sprühmittels mit Hilfe eines tragbaren Sprühgeräts.

## Beschreibung

Die vorliegende Erfindung betrifft eine Vorrichtung und ein Verfahren zur Applikation eines Sprühmittels mit Hilfe eines tragbaren Sprühgeräts.

Tragbare Sprühgeräte sind im Stand der Technik beschrieben. Insbesondere in der Landwirtschaft werden tragbare Sprühgeräte eingesetzt, um Pflanzenschutzmittel zu applizieren. Viele Kleinbauern verwenden vergleichsweise einfache Geräte, die über einen Behälter zur Aufnahme des Sprühmittels und einen Düsenhalter mit einer oder mehreren Düsen, über den das Sprühmittel verteilt werden kann, verfügen. Mittels einer üblicherweise handbetriebenen Pumpe wird das Sprühmittel aus dem Behälter durch Spritzmittelleitungen zum Düsenhalter und durch die eine Düse oder die mehreren Düsen auf ein oder mehrere Zielobjekte befördert, während der Nutzer durch das Zielgebiet schreitet. Die Auftragsmenge ist abhängig von der Schrittgeschwindigkeit, der Sprühbreite und der pro Zeiteinheit geförderten Menge an Sprühmittel. Da die genannten Applikationsparameter während eines Applikationsvorgangs üblicherweise variieren (der Mensch ist keine Maschine), ist die Auftragsmenge über das Zielgebiet ungleichmäßig. Das kann zur Folge haben, dass zu wenig oder zu viel Sprühmittel appliziert wird. Eine zu geringe Applikationsmenge kann Unwirksamkeit des Sprühmittels zur Folge haben. Eine zu große Menge kann unnötige Kosten oder sogar Schäden verursachen. Das Sprühmittel besteht dabei üblicherweise aus einer Trägerflüssigkeit (Wasser) und einem oder mehreren Pflanzenschutzmitteln.

Ziel der vorliegenden Erfindung ist es, das Fehlverhalten eines Nutzers bei der Applikation eines Sprühmittels mit einem transportablen Sprühgerät in einem Zielgebiet auf ein oder mehrere Zielobjekte zu reduzieren, wobei das Sprühgerät kostengünstig in der Herstellung und im Betrieb und einfach in der Handhabung sein sollte, und insbesondere für Kleinbauern geeignet sein sollte.

Erfindungsgemäß wird diese Aufgabe durch die Gegenstände der unabhängigen Ansprüche gelöst. Bevorzugte Ausführungsformen finden sich in den abhängigen Ansprüchen sowie in der vorliegenden Beschreibung.

Ein erster Gegenstand der vorliegenden Erfindung ist somit ein System umfassend
- einen Behälter zur Aufnahme eines Sprühmittels
- Mittel zum Tragen des Behälters durch einen Nutzer
- mindestens eine Düse zur Applikation des Sprühmittels auf ein Zielobjekt
- Mittel zum Fördern des Sprühmittels aus dem Behälter durch die mindestens eine Düse in Richtung des Zielobjekts
- einen Flussmesser zum Bestimmen des Sprühmittelflusses
- einen Abstandssensor zur Ermittlung des Sprühabstandes zwischen der mindestens einen Düse und dem Zielobjekt
- Mittel zur Bestimmung der Geschwindigkeit des Nutzers
- einen oder mehrere Signalgeber
- Mittel zur Erfassung und Auswertung des Sprühmittelflusses, der Geschwindigkeit des Nutzers und des Sprühabstandes
- Mittel zur Steuerung eines oder mehrerer Signalgeber, wobei diese Mittel so konfiguriert sind, dass sie den einen oder die mehreren Signalgeber veranlassen, dem Nutzer ein oder mehrere Signale zu geben, wenn ein oder mehrere Applikationsparameter von vordefinierten Werten abweichen.

Ein weiterer Gegenstand der vorliegenden Erfindung ist ein tragbares Sprühgerät umfassend
- Mittel zum Tragen des Sprühgeräts durch einen Nutzer
- einen Behälter zur Aufnahme eines Sprühmittels
- mindestens eine Düse zur Applikation des Sprühmittels auf ein Zielobjekt
- Mittel zum Fördern des Sprühmittels aus dem Behälter durch die mindestens eine Düse in Richtung des Zielobjekts
- einen Flussmesser zum Bestimmen des Sprühmittelflusses
- einen Abstandssensor zur Ermittlung des Sprühabstandes zwischen der mindestens einen Düse und dem Zielobjekt
- einen oder mehrere Signalgeber
wobei das Sprühgerät so hergerichtet ist, dass es mit einem separaten mobilen Computersystem in der Weise zusammenwirkt, dass es den Sprühmittelfluss und den Sprühabstand an das separate mobile Computersystem übermittelt und das separate mobile Computersystem den einen oder die mehreren Signalgeber veranlasst, dem Nutzer ein oder mehrere Signale zu geben, wenn der Sprühmittelfluss und/oder der Sprühabstand von vordefinierten Werten abweichen.

Ein weiterer Gegenstand der vorliegenden Erfindung ist ein Computerprogrammprodukt, das in den Arbeitsspeicher eines mobilen Computersystems geladen werden kann und dort das mobile Computersystem dazu veranlasst, folgende Schritte auszuführen:
- Empfangen eines Sprühabstandes zwischen mindestens einer Düse und einem Zielobjekt von einem Abstandsensor
- Empfangen einer Geschwindigkeit eines Nutzers
- Empfangen eines Sprühmittelflusses von einem Flussmesser
- Prüfen, ob der Sprühabstand, die Geschwindigkeit und/oder der Sprühmittelfluss von vordefinierten Werten abweichen
- Veranlassen eines oder mehrerer Signalgeber zur Abgabe eines oder mehrerer Signale an den Nutzer, um den Nutzer zu veranlassen, den Sprühabstand, die Geschwindigkeit und/oder den Sprühmittelfluss zu verändern, so dass eine vordefinierte Auftragsmenge an Sprühmittel erreicht wird.

Ein weiterer Gegenstand der vorliegenden Erfindung ist ein Verfahren umfassend die Schritte
- Bewegen eines tragbaren Sprühgeräts durch ein Zielgebiet durch einen Nutzer
- Richten mindestens einer Düse auf ein Zielobjekt
- Fördern eines Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Geschwindigkeit des Nutzers
- Bestimmen des Sprühmittelflusses.

Die Erfindung wird nachstehend näher erläutert, ohne zwischen den Erfindungsgegenständen (System, Sprühgerät, Computerprogrammprodukt, Verfahren) zu unterscheiden. Die nachfolgenden Erläuterungen sollen vielmehr für alle Erfindungsgegenstände in analoger Weise gelten, unabhängig davon, in welchem Kontext (System, Sprühgerät, Computerprogrammprodukt, Verfahren) sie erfolgen.

Sind bei der Beschreibung des erfindungsgemäßen Verfahrens Schritte in einer Reihenfolge aufgeführt, so bedeutet dies nicht zwangsläufig, dass die Schritte auch in der angegebenen Reihenfolge ausgeführt werden müssen. Die Erfindung soll vielmehr so verstanden werden, dass die in einer Reihenfolge aufgeführten Schritte in einer beliebigen Reihenfolge oder auch parallel zueinander ausgeführt werden können, es sei denn, ein Schritt basiert auf einem anderen Schritt, was aus der Beschreibung der Schritte jeweils deutlich wird.

Das erfindungsgemäße System und das erfindungsgemäße Sprühgerät dienen der Applikation eines oder mehrerer Sprühmittel durch einen Nutzer.

Das Sprühmittel ist eine Flüssigkeit, die mit dem Sprühgerät auf ein Zielobjekt appliziert wird oder appliziert werden soll.

Der Begriff Flüssigkeit soll breit verstanden werden; er soll beispielsweise neben Reinstoffen und Lösungen auch Suspensionen und Emulsionen erfassen.

Vorzugsweise enthält das Sprühmittel ein oder mehrere Pflanzenschutzmittel und/oder einen oder mehrere Nährstoffe.

Unter dem Begriff "Pflanzenschutzmittel" wird ein Mittel verstanden, das dazu dient, Pflanzen oder Pflanzenerzeugnisse vor Schadorganismen zu schützen oder deren Einwirkung vorzubeugen, unerwünschte Pflanzen oder Pflanzenteile zu vernichten, ein unerwünschtes Wachstum von Pflanzen zu hemmen oder einem solchen Wachstum vorzubeugen, und/oder in einer anderen Weise als Nährstoffe die Lebensvorgänge von Pflanzen zu beeinflussen (z.B. Wachstumsregler).

Beispiele für Pflanzenschutzmittelgruppen sind Herbizide, Fungizide, Insektizide und Wachstumsregler.

Ein Pflanzenschutzmittel enthält üblicherweise einen Wirkstoff oder mehrere Wirkstoffe. Als "Wirkstoffe" werden Substanzen bezeichnet, die in einem Organismus eine spezifische Wirkung haben und eine spezifische Reaktion hervorrufen. Üblicherweise enthält ein Pflanzenschutzmittel einen Trägerstoff zum Verdünnen des einen oder der mehreren Wirkstoffe. Daneben sind Additive wie Konservierungsmittel, Puffer, Farbstoffe und dergleichen denkbar.

Wachstumsregler dienen zum Beispiel der Erhöhung der Standfestigkeit bei Getreide durch Verkürzung der Halmlänge (Halmverkürzer oder besser Internodienverkürzer), Verbesserung der Bewurzelung von Stecklingen, Verringerung der Pflanzenhöhe durch Stauchung im Gartenbau oder der Verhinderung der Keimung von Kartoffeln. Es sind üblicherweise Phytohormone oder deren synthetischen Analoge.

Unter dem Begriff "Nährstoffe" werden diejenigen anorganischen und organischen Verbindungen verstanden, denen Pflanzen die Elemente entnehmen können, aus denen ihre Körper aufgebaut sind. Als Nährstoffe werden oft auch diese Elemente selbst bezeichnet. Je nach dem Standort der Pflanze werden die Nährstoffe aus der Luft, dem Wasser und dem Boden entnommen. Dabei handelt es sich meistens um einfache anorganische Verbindungen wie Wasser (H₂O) und Kohlendioxid (COz) sowie Ionen wie Nitrat (NO₃⁻), Phosphat (PO₄³⁻) und Kalium (K⁺). Die Verfügbarkeit der Nährstoffe ist unterschiedlich. Sie hängt vom chemischen Verhalten des Nährstoffs und von den Standortbedingungen ab. Da die Nährstoff-Elemente in einem bestimmten Mengenverhältnis benötigt werden, begrenzt meist die Verfügbarkeit eines Elementes das Wachstum der Pflanzen (Minimumgesetz ausführend beschrieben durch Justus von Liebig). Führt man dieses Element zu, steigert sich das Wachstum. Lebensnotwendig sind neben den Kernelementen der organischen Substanz (C, O, H, N und P) noch K, S, Ca, Mg, Mo, Cu, Zn, Fe, B, Mn, Cl bei höheren Pflanzen, Co, Ni. Für die einzelnen Nährstoffe können verschiedene Verbindungen vorliegen, so kann beispielsweise Stickstoff als Nitrat, Ammonium oder Aminosäure zugeführt werden.

Das Zielgebiet ist der räumliche Bereich, in dem ein oder mehrere Zielobjekte mit einem oder mehreren Sprühmittel(n) besprüht werden/werden soll(en).

Beim Zielobjekt / bei den Zielobjekten kann es sich um eine oder mehrere Pflanzen, einen oder mehrere Bereiche eines Feldes (z.B. der Ackerboden), um Wände, Wege, Straßen, Schienen oder andere Objekte handeln. Dabei kann ein Zielgebiet auch Zielobjekte umfassen, die während der Applikation mit unterschiedlichen Mengen eines Sprühmittels oder mit unterschiedlichen Sprühmitteln behandelt werden sollen.

In einer bevorzugten Ausführungsform handelt es sich bei den Zielobjekten um Kulturpflanzen, die in einem Feld angebaut werden. Das Feld ist in diesem Fall das Zielgebiet. In einer weiteren bevorzugten Ausführungsform handelt es sich bei dem Zielobjekt um einen Ackerboden, auf dem Kulturpflanzen angebaut werden oder werden sollen.

Unter dem Begriff "Kulturpflanze" wird eine Pflanze verstanden, die durch das Eingreifen der Menschen zielgerichtet als Nutz- oder Zierpflanze angebaut wird.

Unter dem Begriff "Feld" wird ein räumlich abgrenzbarer Bereich der Erdoberfläche verstanden, der landwirtschaftlich genutzt wird, indem auf einem solchen Feld Kulturpflanzen angepflanzt, gegebenenfalls mit Nährstoffen versorgt und geerntet werden.

Erfindungsgemäß bewegt sich ein Nutzer mit einem Sprühgerät durch ein Zielgebiet (z.B. ein Feld für Kulturpflanzen) und appliziert dabei Sprühmittel auf ein oder mehrere Zielobjekte in dem Zielgebiet.

Das erfindungsgemäße Sprühgerät umfasst mindestens einen Behälter zur Aufnahme eines Sprühmittels. Der Behälter dient zur Aufnahme, Lagerung und/oder zum Transport des Sprühmittels zum Zielgebiet und/oder durch das Zielgebiet.

Es ist denkbar, dass das Sprühgerät zur Applikation von mehreren Sprühmitteln gleichzeitig und/oder nacheinander hergerichtet ist. Es ist denkbar, dass das Sprühmittel aus zwei oder mehr Komponenten besteht, die während eines Sprühvorgangs in dem Sprühgerät und/oder in der mindestens einen Düse zusammengeführt werden. Es ist zum Beispiel denkbar, dass es sich bei einer Komponente um ein Konzentrat (wie beispielsweise ein Pflanzenschutzmittelkonzentrat) und bei einer anderen Komponente um ein Verdünnungsmittel für das Konzentrat (wie beispielsweise Wasser) handelt.

Es ist denkbar, dass das Sprühgerät mehrere Behälter umfasst. Ferner ist denkbar, dass das Sprühgerät einen Behälter zur Aufnahme eines ersten Sprühmittels (z.B. eines Verdünnungsmittels) umfasst und zusätzlich Mittel zum Anschluss eines zweiten Behälters mit einem zweiten Sprühmittel (z.B. einem Pflanzenschutzmittelkonzentrat) umfasst.

Der Behälter kann druckfest ausgeführt sein, so dass der Behälter einem Überdruck (gegenüber dem Atmosphärendruck) ausgesetzt werden kann. Der Überdruck kann beispielsweise genutzt werden, um das Sprühmittel aus dem Behälter zu fördern.

Der Behälter besteht aus einem oder mehreren Materialien, die von dem Sprühmittel nicht angegriffen werden. Vorzugsweise ist der Behälter zumindest teilweise aus Kunststoff ausgeführt. Kunststoffe sind dafür bekannt, dass sie vielen Stoffen gegenüber chemisch inert sind. Sie sind zudem leicht, lassen sich gut verarbeiten und in nahezu beliebige Formen bringen.

In einer bevorzugten Ausführungsform handelt es sich bei dem Behälter um einen Kanister aus Kunststoff, der eine reversibel verschließbare Öffnung umfasst, über die ein oder mehrere Sprühmittel in den Behälter eingefüllt werden kann/können.

Das erfindungsgemäße Sprühgerät ist ein tragbares Sprühgerät. Es wird von einem Nutzer durch ein Zielgebiet transportiert. Dazu weist das Sprühgerät Mittel zum Tragen durch eine Person auf. Vorzugsweise wird zumindest der Behälter des Sprühgeräts auf dem Rücken einer Person getragen. Daher weist das Sprühgerät vorzugsweise Riemen und oder Gurte auf, mit denen der Behälter auf den Rücken einer Person geschnallt werden kann. Das Tragen auf dem Rücken hat unter anderem den Vorteil, dass der Nutzer seine Hände für andere Dinge als das Tragen des Behälters verwenden kann. Grundsätzlich ist es aber auch möglich, dass ein Nutzer das Sprühgerät an einem Fahrrad, einem Handkarren oder einem sonstigen Gefährt befestigt, um es durch ein Zielgebiet zu bewegen und Sprühmittel zu applizieren. Der Transport am Körper (z.B. auf dem Rücken) des Nutzers ist lediglich eine bevorzugte Ausführungsform. Für jede der Ausführungsformen sind verschiedene Möglichkeiten des Antriebs denkbar. So kann das Sprühgerät beispielsweise mechanisch (Muskelkraft oder Antrieb über ein Rad) oder durch einen Motor (Elektro- oder Verbrennungsmotor) betrieben werden.

Das erfindungsgemäße Sprühgerät umfasst ferner eine oder mehrere Düsen, über die das Sprühmittel aus dem Sprühgerät auf ein Zielobjekt abgegeben wird.

Über eine Düse kann eine gewünschte räumliche Verteilung des applizierten Sprühmittels erreicht werden. Üblicherweise verwandelt die Düse die Flüssigkeit, die durch sie hindurchtritt, in Tropfen mit einer spezifischen Tropfengrößenverteilung, die unter anderem vom Druck der Flüssigkeit, von der Fließgeschwindigkeit der Flüssigkeit und der Geometrie der Düse abhängt.

Vorzugsweise ist die Düse austauschbar, so dass ein Anwender eine an die Applikation und das Zielobjekt angepasste Düse mit einer gewünschten Tropfengrößenverteilung und räumlichen Verteilung des Sprühmittels auswählen kann.

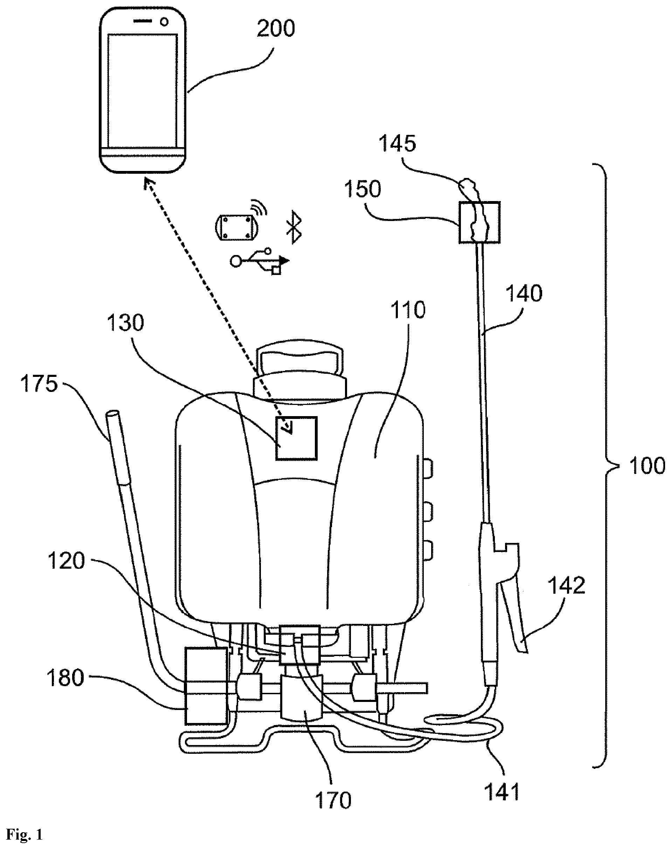

Die mindestens eine Düse ist an einen Düsenhalter angebracht, der vom Nutzer vorzugsweise in einer Hand gehalten werden kann. Der Düsenhalter kann beispielsweise lanzenförmig oder pistolenförmig sein oder eine andere Form aufweisen. Er ist vorzugsweise so ausgeführt, dass der Nutzer die mindestens eine Düse auf ein Zielobjekt richten und Sprühmittel auf das Zielobjekt applizieren kann. Der Düsenhalter stellt dabei in der Regel zugleich die Leitung von der Pumpe zu der einen oder den mehreren Düse/n dar und ist meist als Spritzlanze ausgestaltet, wobei diese aus einem Rohr besteht, welches durch einen flexiblen Schlauch an den Pumpenauslass angeschlossen ist (siehe auch Figur 1).

Vorzugsweise umfasst der Düsenhalter eine Querstange, die sich quer zur Bewegungsrichtung des Nutzers beim Applizieren des Sprühmittels erstreckt und die mehrere Düsen, vorzugsweise zwei, drei, vier oder mehr Düsen umfasst, die über die Länge der Querstange vorzugsweise gleichmäßig verteilt sind. Ebenso ist es denkbar, dass das Ende des Düsenhalters die Form einer Gabel oder eine Harke besitzt, wobei an den Enden, die den Gabelspitzen/Harkenspitzen entsprechen, Düsen angebracht sind. Weitere Formen sind denkbar. Der Düsenhalter besteht meist aus mehreren Einzelteilen. So ist es üblicherweise möglich, die gesamte Einheit des Düsenhalters den Bedingungen, etwa durch Benutzung einer Querstange, anzupassen. Auch können in den Düsenhalter weitere Bauteile integriert oder eingebaut sein (beispielsweise Druckbegrenzungsventile oder Filter). In einer bevorzugten Ausführungsform ist dem Düsenhalter ein druckregelndes Ventil vorgeschaltet.

Das erfindungsgemäße Sprühgerät umfasst ferner Mittel zum Fördern des Sprühmittels aus dem Behälter durch die mindestens eine Düse in Richtung Zielobjekt. Vorzugsweise handelt es sich bei diesem Fördermittel um eine Pumpe. Die Pumpe kann elektrisch oder mechanisch, vorzugsweise manuell durch den Nutzer betrieben werden. Es ist auch denkbar, das Sprühmittel mittels Druck aus einem Kompressor oder einer Druckkartusche aus dem Behälter zu fördern.

In einer bevorzugten Ausführungsform weist das erfindungsgemäße Sprühgerät eine handbetriebene Pumpe auf, mit der das Sprühmittel aus dem Behälter durch die mindestens eine Düse in Richtung auf das Zielobjekt gefördert werden kann.

Das erfindungsgemäße Sprühgerät umfasst einen Flussmesser zum Bestimmen der Menge des pro Zeiteinheit aus dem Sprühgerät austretenden Sprühmittels. Unter Menge wird je nach verwendetem Messverfahren das Volumen oder die Masse verstanden.

Der Flussmesser ist vorzugsweise ein Durchflussmesser, der in Flussrichtung vor der mindestens einen Düse angebracht ist. Der Durchflussmesser ist beispielsweise ein magnetisch-induktiver Durchflussmesser, ein Schwebekörper-Durchflussmesser, ein Ultraschall-Durchflussmesser, ein Coriolis-Massendurchflussmesser, ein kalorimetrischer Durchflussmesser oder ein Vortex-Durchflussmesser. Denkbar ist aber auch die Verwendung einer Messblende oder einer Staudrucksonde.

In einer bevorzugten Ausführungsform wird die Durchflussmessung mit Hilfe eines Differenzdrucksensors vorgenommen.

Details zur Durchflussmessung können beispielsweise dem folgenden Lehrbuch entnommen werden: K.W. Bonfig: Technische Durchflussmessung, Vulkan-Verlag Essen, 3. Auflage, 2002, ISBN 3-8027-2190-X.

Das erfindungsgemäße Sprühgerät umfasst ferner einen Abstandssensor zur Ermittlung des Sprühabstandes zwischen der mindestens einen Düse und dem Zielobjekt (Düsen-Zielobjekt-Abstand). Er ist bevorzugt in der Nähe der mindestens einen Düse angebracht. Der Abstandssensor arbeitet vorzugsweise berührungslos. Es kann sich bei dem Abstandssensor beispielsweise um einen Laserentfernungsmesser oder einen Ultraschallsensor handeln.

Das erfindungsgemäße System umfasst Mittel zur Bestimmung der Geschwindigkeit des Nutzers. In einer bevorzugten Ausführungsform werden ein GPS-Sensor (GPS = Globales Positionsbestimmungssystem) und ein Zeitmesser (oder ein ähnliches Positionsbestimmungssystem) verwendet, mit denen der jeweilige Ort des Nutzers erfasst wird und die Zeit ermittelt wird, die vergeht, wenn sich der Nutzer von einem Ort zu einem anderen Ort begibt.

In einer bevorzugten Ausführungsform sind der GPS-Sensor und der Zeitmesser Bestandteile eines separaten mobilen Computersystems, vorzugsweise eines Smartphones oder Tablet Computers oder einer Smart Watch oder eines vergleichbaren so genannten Handheld-Devices. In einem solchen Fall sind die Mittel zur Bestimmung der Geschwindigkeit des Nutzers kein integraler Bestandteil des Sprühgeräts sondern das Sprühgerät und das separate mobile Computersystem sind physikalisch voneinander getrennte Objekte, die im Sinne der Erfindung zusammenwirken. Neben der Bestimmung der Geschwindigkeit können weitere Funktionen des Sprühgeräts auf ein separates mobiles Computersystem "ausgelagert" werden. Es ist aber auch denkbar, dass ein oder mehrere Computersysteme integrale Bestandteile des Sprühgeräts sind.

In einer anderen bevorzugten Ausführungsform handelt es sich bei dem Geschwindigkeitsmesser um eine Kombination aus einem Zeitmesser und einem Schrittzähler, wie er heute in zahlreichen so genannten Smart Watches, in Smartphones oder in Fitness-Trackern implementiert ist. Nach Bestimmung einer Schrittlänge kann die Schrittgeschwindigkeit durch die folgende Formel ermittelt werden: Anzahl der Schritte multipliziert mit der Schrittlänge dividiert durch die Zeit, die für die Schritte erforderlich war. Die Verwendung eines Schrittzählers ist nur dann sinnvoll, wenn der Nutzer seine Schrittlänge konstant halten kann. Zum Beispiel kann es sein, dass die Bodenbeschaffenheiten bei unterschiedlich angebauten Kulturen und damit Bewirtschaftungsformen auch bei räumlicher Nähe variieren. Auch kann es sein, dass der Boden innerhalb des Zielgebietes ungleichmäßig ist und der Nutzer demzufolge Schwierigkeiten hat, seine Schrittlänge konstant zu halten. Bei unterschiedlichen Gegebenheiten zwischen den einzelnen Einsatzorten (Feldern) kann es daher notwendig sein, die für diese Gegebenheiten spezifische Schrittlänge respektive Schrittgeschwindigkeit zu ermitteln.

Das erfindungsgemäße System umfasst ferner einen oder mehrere Signalgeber. Der mindestens eine Signalgeber kann ein integraler Bestandteil des Sprühgeräts sein; ebenso ist es denkbar, dass der mindestens eine Signalgeber ein Bestandteil eines separaten mobilen Computersystems ist; es ist aber auch denkbar, dass mehrere Signalgeber vorhanden sind, von denen mindestens einer ein integraler Bestandteil des Sprühgeräts und mindestens ein anderer ein integraler Bestandteil eines separaten mobilen Computersystems ist.

Ein Signalgeber kann dazu veranlasst werden, ein oder mehrere Signale abzugeben, das/die den Nutzer auf das Eintreten eines Ereignisses oder auf einen bestimmten Umstand hinweisen soll/sollen. Bei einem Signal kann es sich um ein akustisches Signal handeln, das heißt um einen Ton und/oder ein Geräusch, das vom menschlichen Gehör wahrgenommen werden kann. Auch eine Sprachnachricht ist ein geeignetes akustisches Signal. Bei einem Signal kann es sich aber auch um ein visuelles Signal handeln, zum Beispiel um ein an- oder ausgehendes oder blickendes Licht, das vom menschlichen Auge erfasst werden kann. Bei einem Signal kann es sich aber auch um ein taktiles Signal handeln, wie beispielsweise eine Vibration, die bei Berührung vom menschlichen Körper wahrgenommen kann.

Das erfindungsgemäße System umfasst ferner Mittel zur Erfassung und Auswertung der Daten, die während eines Sprühvorgangs anfallen und die einen Einfluss auf die Auftragsmenge an Sprühmittel und/oder deren Verteilung im Zielgebiet haben (Applikationsparameter). Applikationsparameter sind vorzugsweise die Geschwindigkeit des Nutzers, die Menge des pro Zeiteinheit über die mindestens eine Düse abgegebenen Sprühmittels (Sprühmittelfluss) und der Abstand zwischen der mindestens einen Düse und dem Zielobjekt. Die Mittel zur Erfassung der Daten werden hier auch als Erfassungseinheit bezeichnet. Die Mittel zur Auswertung der Daten werden hier auch als Auswerteeinheit bezeichnet.

Das erfindungsgemäße System umfasst ferner Mittel zur Steuerung des eines oder der mehreren Signalgebers - nachfolgend auch als Steuermittel bezeichnet. Die Steuermittel sind so ausgestaltet, dass sie den einen oder die mehreren Signalgeber veranlassen, dem Nutzer ein oder mehrere Signale zu geben, wenn ein oder mehrere Applikationsparameter von vordefinierten Werten abweichen.

Bei der Erfassungseinheit, der Auswerteeinheit und/oder der Steuereinheit kann es sich um eine oder um mehrere separate Einheiten handeln. So ist es denkbar, dass Erfassungseinheit, Auswerteeinheit und/oder Steuereinheit Bestandteile eines einzigen Computersystems sind, das die komplette Signalverarbeitung und Sensorsteuerung übernimmt. Denkbar ist aber auch, dass Funktionalitäten der Erfassung, Auswertung und/oder Steuerung auf verschiedene separate Einheiten verteilt sind, die miteinander Informationen austauschen können.

Bei der Erfassungseinheit, der Auswerteeinheit und/oder der Steuereinheit kann es sich um einen oder mehrere Mikrocontroller und/oder um ein separates mobiles Computersystem wie beispielsweise ein Smartphone oder einen Tablet-Computer oder eine Smart Watch oder ein vergleichbares Handheld Device handeln. Auch eine Kombination von einem oder mehreren Mikrocontrollern zum Beispiel zum Verarbeiten der von einem oder mehreren Sensoren ermittelten Daten mit einem mobilen Computersystem zum Beispiel zur Ansteuerung der Signalgeber ist denkbar.

In einer besonders bevorzugten Ausführungsform wird ein Einplatinencomputer wie beispielsweise ein Raspberry Pi oder ein Arduino oder ein vergleichbares Gerät verwendet, um die von dem Abstandssensor, dem Sprühmittelflussmesser und/oder ggf. weiteren Sensoren generierten Daten zu empfangen und diese an ein separates mobiles Computersystem (vorzugsweise ein Smartphone oder Tablet-Computer) weiterzuleiten. Das separate mobile Computersystem verfügt vorzugsweise über einen GPS-Sensor und einen Zeitmesser, mit dem die Position und die Geschwindigkeit des Nutzers ermittelt werden können. Das separate mobile Computersystem empfängt die Sensordaten vom Einplatinencomputer vorzugsweise über Bluetooth oder eine serielle Verbindung wie beispielsweise USB (Universal Serial Bus), wertet sie zusammen mit der Geschwindigkeit des Nutzers aus und veranlasst einen oder mehrere Signalgeber, ein oder mehrere Signale zu geben, falls die Auftragsmenge und/oder ein oder mehrere Applikationsparameter außerhalb der definierten Grenzen liegen. Für die Datenverbindung kommen auch weitere, kabelgebundene oder kabellose Techniken in Frage.

Die Kombination eines tragbaren Sprühgeräts mit einem separaten mobilen Computersystem wie einem Smartphone oder einem anderen Handheld Device ist besonders vorteilhaft, weil heutzutage viele Menschen ein solches Handheld Device besitzen und sehr häufig mit sich tragen. Vorzugsweise werden daher viele Funktionalitäten des erfindungsgemäßen Systems vom separaten mobilen Computersystem übernommen, insbesondere diejenigen, über die jedes Handheld Device (insbesondere Smartphone) heutzutage üblicherweise verfügt: zum Beispiel Positionsbestimmung, Zeitmessung, Geschwindigkeitsermittlung, Datenerfassung und Datenauswertung, Ansteuerung von Signalgebern, Abgabe von visuellen, akustischen und/oder taktilen Signalen, Speicherung von Daten u.v.m.

Vorzugsweise weist das erfindungsgemäße Sprühgerät eine Halterung zur Aufnahme des als Smartphone oder Tablet-Computer ausgeführten separaten mobilen Computersystems auf. Die Halterung dient der reversiblen Befestigung des Smartphones oder Tablet-Computers am Sprühgerät. Die Halterung ist vorzugsweise so ausgeführt, dass das separate mobile Computersystem an die Energieversorgung des Sprühgeräts angeschlossen werden kann, um den Akkumulator des separaten mobilen Computersystems zu schonen/entlasten und/oder aufzuladen. Vorzugsweise ist ein Anschluss für eine Datenverbindung vorhanden, um das Smartphone oder den Tablet-Computer mittelbar (z.B. über einen Einplatinencomputer) oder unmittelbar mit einem oder mehreren Sensoren am Sprühgerät zu verbinden.

Das erfindungsgemäße System/Sprühgerät umfasst vorzugsweise einen oder mehrere Akkumulatoren zur Energieversorgung.

In einer bevorzugten Ausführungsform umfasst das erfindungsgemäße System/Sprühgerät einen oder mehrere Generatoren zur Erzeugung elektrischer Energie. Vorzugsweise erzeugt der mindestens eine Generator die komplette, für den Gebrauch der elektrisch betriebenen Komponenten des erfindungsgemäßen Systems/Sprühgeräts notwendige, elektrische Energie.

In einer bevorzugten Ausführungsform handelt es sich bei dem mindestens einen Generator um eine oder mehrere Solarzellen, die an oder auf dem Sprühgerät an- oder aufgebracht ist/sind. Vorzugsweise ist die mindestens eine Solarzelle am Behälter angebracht.

In einer weiteren bevorzugten Ausführungsform handelt es sich bei dem mindestens einem Generator um einen Gleichstromgenerator (Dynamo), der vorzugsweise von demjenigen Hebel angetrieben wird, mit dem auch die bevorzugte handbetriebene Pumpe als Fördermittel für das Sprühmittel betrieben wird. Pumpt der Nutzer manuell Sprühmittel aus dem Behälter in Richtung Zielobjekt, wird gleichzeitig der Gleichstromgenerator angetrieben und es werden die elektrisch betriebenen Komponenten des Sprühgeräts mit elektrischer Energie gespeist und überschüssige Energie ggf. in einen vorzugsweise vorhandenen Akkumulator eingespeist.

Denkbar ist auch eine Kombination aus Solarzelle und Gleichstromgenerator. Eine solche Kombination hat den Vorteil, dass bei Sonnenschein ggf. auf den Gleichstromgenerator verzichtet werden kann, während bei bewölktem Himmel und für den Fall, dass die über die Solarzelle erzeugte Energiemenge nicht ausreicht, der Gleichstromgenerator als zusätzliche Energiequelle genutzt werden kann.

Vorzugsweise weist das erfindungsgemäße Sprühgerät neben einem oder mehreren Generatoren einen Speicher für elektrische Energie (Akkumulator) auf, der überschüssige Energie speichern und bei Bedarf an die elektrisch betriebenen Komponenten des erfindungsgemäßen Sprühgeräts abgeben kann.

Erfindungsgemäß gilt es, das Fehlverhalten eines Nutzers beim Aufbringen einer definierten Auftragsmenge zu minimieren. Erfindungsgemäß werden daher Applikationsparameter während des Sprühvorgangs erfasst und ausgewertet. Die Erfassung und Auswertung kann zur Überwachung des Sprühvorgangs und/oder zur Kalibrierung des erfindungsgemäßen Sprühgeräts genutzt werden.

Das erfindungsgemäße Verfahren umfasst die Schritte:
- Bewegen eines tragbaren Sprühgeräts durch ein Zielgebiet durch einen Nutzer
- Richten mindestens einer Düse auf ein Zielobjekt
- Fördern eines Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Geschwindigkeit des Nutzers
- Bestimmen des Sprühmittelflusses.

Vorzugsweise werden die genannten Schritte parallel zueinander ausgeführt. Während der Nutzer das tragbare Sprühgerät durch ein Zielgebiet bewegt und dabei mindestens eine Düse auf ein Zielobjekt richtet, wird ein Sprühmittel aus dem Sprühgerät durch die mindestens eine Düse auf das Zielobjekt gefördert und dabei werden der Sprühabstand zwischen der mindestens einen Düse und dem Zielobjekt, die Geschwindigkeit des Nutzers und der Sprühmittelfluss mit entsprechenden Sensoren bestimmt.

In einer Ausführungsform der vorliegenden Erfindung handelt es sich bei dem erfindungsgemäßen Verfahren um ein Verfahren zur Applikation eines Sprühmittels auf ein Zielobjekt. Vorzugsweise umfasst dieses Verfahren die folgenden Schritte:
- Bewegen eines tragbaren Sprühgeräts enthaltend das Sprühmittel durch ein Zielgebiet durch einen Nutzer, der das Zielgebiet vorzugsweise durchschreitet
- Richten mindestens einer Düse auf ein Zielobjekt
- Fördern des Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Geschwindigkeit des Nutzers
- Bestimmen des Sprühmittelflusses
- Erzeugen eines oder mehrerer Signale für den Fall, dass ein oder mehrere Applikationsparameter von vordefinierten Werten abweichen.

In dieser bevorzugten Ausführungsform wird die Applikation eines Sprühmittels durch entsprechende Sensoren überwacht. Immer dann, wenn ein oder mehrere Applikationsparameter von vordefinierten Werten abweichen, wird/werden dem Nutzer ein oder mehrere Signale gegeben. Das Abweichen von einem oder mehreren Applikationsparametern von vordefinierten Werten kann zur Folge haben, dass die gewünschte/erforderliche Auftragsmenge nicht eingehalten wird. Durch ein entsprechendes Signal wird der Nutzer auf diesen Umstand hingewiesen.

Die Auftragsmenge ist die Menge an Sprühmittel, die pro Flächeneinheit aufgebracht wird. Die Menge kann in Volumen oder Masse angegeben werden.

Wird von dem Sprühgerät über die mindestens eine Düse eine konstante Menge an Sprühmittel pro Zeiteinheit abgegeben, so ist die Auftragsmenge davon abhängig, wie schnell sich der Nutzer durch das Zielgebiet bewegt, während er Sprühmittel appliziert. Je schneller er sich bei konstantem Sprühmittelfluss und konstanter Sprühbreite bewegt, desto geringer ist die Auftragsmenge. Ferner ist die Auftragsmenge von der Sprühbreite abhängig. Die Sprühbreite ist die zur Bewegungsrichtung des Nutzers senkrechte Ausdehnung desjenigen Flächenstücks, das von dem Sprühmittel bei einem Sprühvorgang benetzt wird. Je größer die Sprühbreite bei konstantem Sprühmittelfluss und konstanter Geschwindigkeit des Nutzers ist, desto geringer ist die Auftragsmenge. Die Sprühbreite ist üblicherweise vom Abstand der mindestens einen Düse vom Zielobjekt abhängig. Üblicherweise wird die Sprühbreite mit zunehmendem Abstand größer. Bei der Verwendung von nur einer Düse und einer Zielfläche als Zielobjekt ist es auch denkbar, dass der Nutzer den Düsenhalter, der dann üblicherweise als Spritzlanze ausgestaltet ist, und an dessen Ende die eine Düse durch eine Art pendelnde Bewegung beim Vorwärtsgehen über die Zielfläche führt und somit die Sprühbreite in erster Linie von der Pendelbewegung abhängt.

Um eine möglichst gleichbleibende und definierte Auftragsmenge zu erzielen, werden die Geschwindigkeit des Nutzers, der Sprühmittelfluss und der Düsen-Zielobjekt-Abstand während des Applikationsvorgangs erfasst.

Es ist auch denkbar, dass der Nutzer den Düsenhalter quer zur Schrittrichtung bewegen sollte, um die Sprühbreite zu vergrößern. Es ist zum Beispiel denkbar, dass der Düsenhalter so hergerichtet ist, dass das applizierte Sprühmittel nur eine schmale (quer zur Schrittrichtung) Fläche benetzt. Üblicherweise wird die Sprühbreite durch eine Hin- und Her-Bewegung des Düsenhalters quer zur Schrittrichtung vergrößert. In einer bevorzugten Ausführungsform verfügt das erfindungsgemäße Sprühgerät über einen Sensor zur Erfassung der Auslenkungsweite des Düsenhalters quer zur Schrittrichtung des Nutzers bei der Hin- und Her-Bewegung. Ebenso ist es denkbar, dass neben der Auslenkungsweite auch die Pendelfrequenz und/oder die Lage des Düsenhalters im Raum erfasst wird. Je nach Geometrie des Düsenhalters wird die Sprühbreite auch dadurch beeinflusst, wie der Düsenhalter zur Bewegungsrichtung und zum Zielobjekt ausgerichtet ist. Entsprechende Lagesensoren können eingesetzt werden, um auch diese Applikationsparameter zu erfassen.

Falls sich die Werte eines oder mehrerer der erfassten Applikationsparameter so ändern, dass eine gleichbleibende und definierte Auftragsmenge über das gesamte Zielgebiet, oder ein zuvor definiertes Teilgebiet des Zielgebiets, nicht mehr gegeben ist, so veranlasst die Steuereinheit den mindestens einen Signalgeber dazu, ein Signal abzugeben, so dass der Nutzer darüber informiert ist, dass ein oder mehrere Applikationsparameter außerhalb vordefinierter Grenzen liegen und/oder dass eine gleichbleibende und definierte Auftragsmenge über das gesamte Zielgebiet nicht mehr gegeben ist. Der Nutzer kann dann sein Verhalten ändern, um wieder eine gleichbleibende und definierte Auftragsmenge zu erreichen. Dabei bedeutet "gleichbleibende und definierte Auftragsmenge", dass sich die Auftragsmenge während des Applikationsvorgangs innerhalb definierter Grenzen (üblicherweise eine Ober- und eine Untergrenze) bewegt.

Es ist zum Beispiel denkbar, dass sich der Nutzer zu langsam oder zu schnell bewegt und die Auftragsmenge zu groß bzw. zu klein ist. Die Auswerteeinheit erkennt durch Vergleich der aktuellen Geschwindigkeit des Nutzers mit einer definierten Geschwindigkeitsuntergrenze bzw. einer definierten Geschwindigkeitsobergrenze, dass sich der Nutzer zu langsam bzw. zu schnell bewegt. Die Steuereinheit veranlasst mindestens einen Signalgeber dazu, ein Signal abzugeben, um den Nutzer zu einer höheren bzw. zu einer niedrigeren Geschwindigkeit anzuregen. Dabei werden die Geschwindigkeitsuntergrenze und Geschwindigkeitsobergrenze spezifisch zur jeweiligen Einsatzsituation automatisch oder manuell gesetzt. Basis dafür ist in der Regel eine vor der eigentlichen Applikation eines Sprühmittels durchgeführte Kalibration des Sprühgerätes.

Es ist zum Beispiel denkbar, dass der Nutzer den Düsenhalter mit der mindestens einen Düse zu hoch oder zu niedrig hält, so dass der Düsen-Zielobjekt-Abstand zu groß bzw. zu klein ist und die Auftragsmenge dementsprechend zu niedrig bzw. zu hoch ist. Die Auswerteeinheit erkennt durch Vergleich des aktuellen Düsen-Zielobjekt-Abstands mit einer definierten Düsen-Zielobjekt-Abstandsobergrenze bzw. einer definierten Düsen-Zielobjekt-Abstandsuntergrenze, dass der Nutzer den Düsenhalter zu hoch bzw. zu niedrig hält. Die Steuereinheit veranlasst mindestens einen Signalgeber dazu, ein Signal abzugeben, um den Nutzer zu einer niedrigeren bzw. zu einer höheren Düsenhalterhaltung anzuregen. Die Unter- und Obergrenze des Düsen-Zielobjekt-Abstands sind dabei spezifisch und können je nach Einsatzsituation und Düsenkonfiguration des Sprühgerätes variieren.

Im Fall der Verwendung eines manuell steuerbaren Fördermittels zur Förderung des Sprühmittels aus dem Behälter in Richtung Zielobjekt (z.B. bei Verwendung einer handbetriebenen Pumpe) kann es auch sein, dass der Sprühmittelfluss zu niedrig oder zu hoch ist. Die Auswerteeinheit erkennt durch Vergleich des aktuellen Sprühmittelflusses mit einer definierten Sprühmittelflussuntergrenze bzw. einer definierten Sprühmittelflussobergrenze, dass der Sprühmittelfluss zu niedrig bzw. zu hoch ist. Die Steuereinheit veranlasst mindestens einen Signalgeber dazu, ein Signal abzugeben, um den Nutzer zur Einstellung eines höheren bzw. niedrigeren Sprühmittelflusses anzuregen.

Es ist zum Beispiel auch denkbar, dass der Nutzer den Düsenhalter durch eine fehlerhafte Hin- und Her-Bewegung zu weit oder zu kurz auslenkt und die Auftragsmenge zu klein bzw. zu groß ist. Die Auswerteeinheit erkennt durch Vergleich der aktuellen Auslenkungsweite mit einer definierten Auslenkungsweitenobergrenze bzw. einer definierten Auslenkungsweitenuntergrenze, dass der Nutzer den Düsenhalter zu weit bzw. zu kurz auslenkt. Die Steuereinheit veranlasst mindestens einen Signalgeber dazu, ein Signal abzugeben, um den Nutzer zu einer geringeren bzw. zu einer höheren Auslenkungsweite anzuregen.

Es ist auch denkbar, dass die Auswerteeinheit aus den erfassten Parametern eine Auftragsmenge errechnet und die Steuereinheit dem Nutzer über einen oder mehrere Signalgeber ein oder mehrere Signale übermittelt, wenn sich die Auftragsmenge unterhalb einer definierten Auftragsmengenuntergrenze und/oder oberhalb einer definierten Auftragsmengenobergrenze befindet. In einem solchen Fall könnte es sein, dass es dem Nutzer überlassen wird, ob er die korrekte Auftragsmenge dadurch erreichen will, dass er seine Geschwindigkeit anpasst, den Sprühmittelfluss anpasst und/oder die Sprühbreite (wenn möglich) anpasst. Vorzugsweise passt der Nutzer die Auftragsmenge durch Veränderung seiner Geschwindigkeit und/oder des Sprühmittelflusses an.

Möglicherweise verfügt das Sprühgerät ferner über einen Druckregler, der, in gewissen, durch die Bauteile definierten Grenzen, einen Über- und Unterdruck verhindern kann. Der Applikation kann dadurch bereits eine Fehlerquelle genommen werden. Die Ermittlung des Sprühmittelflusses ist dennoch mindestens zur Kalibrierung, aber auch zur Kontrolle sinnvoll.

In einer Ausführungsform der vorliegenden Erfindung wird die Geschwindigkeit des Nutzers ermittelt und der Sprühmittelfluss durch eine Regel- und Steuereinheit automatisch so an die Geschwindigkeit des Nutzers angepasst, dass die Auftragsmenge einen definierten Wert annimmt bzw. innerhalb definierter Grenzen liegt. Der Nutzer erhält ein Signal, wenn der Sprühabstand zwischen der mindestens einen Düse und einem Zielobjekt außerhalb definierter Grenzen liegt.

Vorzugsweise wird das erfindungsgemäße Sprühgerät kalibriert, bevor es eingesetzt wird.

In einer weiteren Ausführungsform der vorliegenden Erfindung handelt es sich bei dem erfindungsgemäßen Verfahren um ein Verfahren zum Kalibrieren eines tragbaren Sprühgeräts. Vorzugsweise umfasst dieses Verfahren die folgenden Schritte:
- Bewegen des Sprühgeräts durch ein Zielgebiet durch einen Nutzer
- Richten mindestens einer Düse auf ein Zielobjekt in einem definierten Sprühabstand zwischen der mindestens einen Düse und dem Zielobjekt
- Fördern eines Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Geschwindigkeit des Nutzers
- Bestimmen des Sprühmittelflusses
- Bestimmen der Sprühbreite durch Ausmessen der Breite des besprühten Zielobjekts
- Berechnen eines Wertes oder eines Wertebereichs für einen applikationsspezifischen Parameter auf Basis der bestimmten Geschwindigkeit des Nutzers, des Sprühmittelflusses und/oder der Sprühbreite.

In dieser bevorzugten Ausführungsform erfolgen die ersten sechs Schritte vorzugsweise parallel zueinander: während der Nutzer das Sprühgerät durch das Zielgebiet bewegt, richtet er die mindestens eine Düse in einem definierten Sprühabstand auf das Zielobjekt und fördert dabei ein Sprühmittel auf das Zielobjekt, wobei dabei der Sprühabstand, die Geschwindigkeit des Nutzers und der Sprühmittelfluss durch entsprechende Sensoren bestimmt werden. In einem nachfolgenden Schritt wird die Sprühbreite bestimmt; in einem dann nachfolgenden Schritt wird der Wert oder Wertebereich für einen applikationsspezifischen Parameter berechnet.

Die Kalibrierung umfasst somit die Bestimmung von Applikationsparametern, beispielsweise von nutzerspezifischen Parametern. Zur Kalibrierung kann der Nutzer aufgefordert werden, mit dem erfindungsgemäßen Sprühgerät eine definierte Strecke, vorzugsweise innerhalb der späteren Zielfläche, mit möglichst gleichbleibender Geschwindigkeit zurückzulegen, um zu ermitteln, mit welcher mittleren Geschwindigkeit sich die Person bewegt. Die Geschwindigkeit kann zum einen von Person zu Person unterschiedlich sein, zum anderen können äußere Umstände wie Bodenbeschaffenheit, Hitze, Kälte, Wind, Gewicht des Sprühgeräts und dergleichen einen Einfluss auf die Geschwindigkeit haben. Ziel dieser Kalibrierung kann es sein, die für den nachfolgenden Applikationsvorgang zu erwartende mittlere Geschwindigkeit des jeweiligen Nutzers in dem jeweiligen Zielgebiet zu ermitteln. Zur Kalibrierung kann der Nutzer ferner aufgefordert werden, mit dem erfindungsgemäßen Sprühgerät eine definierte Strecke zurückzulegen, und dabei den Düsenhalter in einem definierten Abstand beispielsweise über dem Boden zu halten oder zu bewegen. Ziel dieser Kalibrierung kann es sein, den für den nachfolgenden Applikationsvorgang zu erwartenden Düsen-Zielobjekt-Abstand zu ermitteln, die für den nachfolgenden Applikationsvorgang zu erwartende Pendelfrequenz des Düsenhalters zu ermitteln und/oder die für den nachfolgenden Applikationsvorgang zu erwartende Auslenkungsweite des Düsenhalters und damit die Sprühbreite zu ermitteln. Zur Kalibrierung kann der Nutzer ferner aufgefordert werden, eine definierte Strecke zurückzulegen und dabei ein Sprühmittel durch manuelle Pumpbewegungen zu applizieren. Ziel dieser Kalibrierung kann es sein, einen mittleren Sprühmittelfluss, den der Nutzer durch die Pumpbewegungen erzeugt, zu ermitteln. Vorzugsweise werden dabei möglichst viele Messungen kombiniert.

Sind die vorzugsweise nutzerspezifischen bzw. nutzerabhängigen Parameter ermittelt, kann von einer Computereinheit berechnet werden, wie hoch andere applikationsspezifische Parameter, die die Auftragsmenge bestimmen, eingestellt werden müssen, um eine definierte Auftragsmenge zu gewährleisten. Zum Beispiel kann die Zusammensetzung des Sprühmittels an die nutzerspezifischen Parameter angepasst werden. Beispielsweise kann sich aus den ermittelten nutzerspezifischen/nutzerabhängigen Parametern eine optimale Konzentration eines Wirkstoffs in einem Verdünnungsmittel ergeben. In diesem Fall dient die Kalibrierung der Ermittlung des optimalen Verdünnungsgrads eines Wirkstoffs in dem Sprühmittel. Es ist zum Beispiel denkbar, dass die Mengen an Wirkstoff und Verdünnungsmittel, die in den Behälter gefüllt werden sollen, um eine geplante Applikation ausführen zu können, dem Nutzer zum Beispiel auf einem Display angezeigt werden. Es ist denkbar, dass bei der Berechnung der Mengen das Volumen des Behälters und/oder die Größe des Zielgebiets berücksichtigt wird/werden.

Es ist aber auch denkbar, dass der Sprühmittelfluss an die nutzerspezifischen Parameter angepasst wird/werden soll.

In einer bevorzugten Ausführungsform besteht zumindest ein Teil der Kalibrierung in der Ermittlung der Sprühbreite. Dazu wird der Nutzer aufgefordert eine definierte Strecke mit dem erfindungsgemäßen Sprühgerät zurückzulegen und dabei Sprühmittel auf den Boden zu applizieren. Anschließend wird die Breite der besprühten Fläche (senkrecht zur Schrittrichtung) ausgemessen. Das Ausmessen kann mit Hilfe eines Maßbandes erfolgen; es ist aber auch denkbar, dass der Nutzer mit Hilfe eines Smartphones oder eines Tablet-Computers oder dergleichen ein Foto von der besprühten Fläche aufnimmt und eine Software das Foto analysiert, um die Breite des besprühten Bereichs zu bestimmen. Es ist denkbar, dass hierzu eine Referenz auf den Boden gelegt wird und neben dem besprühten Bereich auch die Referenz auf dem Foto erfasst wird, so dass die Breite des besprühten Bereichs durch Vergleich mit der Referenz quantifiziert werden kann. Denkbar ist, dass die Referenz eine auf dem Sprühgerät angebrachte Markierung ist. Die Zugabe der Pflanzenschutzmittel und/oder Nährstoffe erfolgt vorzugsweise erst nach und auf Grundlage der Kalibrierung, sodass während der Kalibrierung lediglich die Trägerflüssigkeit ausgebracht wird.

In einer bevorzugten Ausführungsform umfasst das erfindungsgemäße System einen oder mehrere Sensoren zur Bestimmung der während eines Sprühvorgangs herrschenden Umweltbedingungen wie beispielsweise Luftdruck, Luftfeuchte und/oder Lufttemperatur. Dabei ist es denkbar, dass etwaige, ungünstige Kombinationen dieser Umweltbedingungen dazu führen, dass dem Nutzer über den einen oder die mehreren Signalgeber ein akustisches, visuelles und/oder taktiles Signal gegeben wird/werden.

In einer bevorzugten Ausführungsform zeichnet das erfindungsgemäße Computerprogramm, wenn es auf dem mobilen Computersystem geladen ist, das der Nutzer während eines Sprühvorgangs mit sich führt, den zurückgelegten Weg des Nutzers durch das Zielgebiet, die ortsspezifisch applizierten Mengen an Sprühmittel und/oder ggf. weitere Parameter (Datum, Uhrzeit, Dauer, eingesetztes Sprühmittel, Verdünnungsgrad des Sprühmittels, Umgebungstemperatur, Luftfeuchte, Nutzer, und andere) auf. So kann der Nutzer oder eine andere Person zu einem späteren Zeitpunkt z.B. nachvollziehen, wann und unter welchen Bedingungen welcher Nutzer welche Mengen eines Sprühmittels aufgebracht hat. Ebenso können diese Daten verwendet werden, um den Erfolg der Applikation zu evaluieren und eventuell nachfolgende Sprühvorgänge zu planen.

Weitere Ausführungsformen der vorliegenden Erfindung sind:
1. Ein System umfassend
   - einen Behälter zur Aufnahme eines Sprühmittels
   - Mittel zum Tragen des Behälters durch einen Nutzer
   - mindestens eine Düse zur Applikation des Sprühmittels auf ein Zielobjekt
   - Mittel zum Fördern des Sprühmittels aus dem Behälter durch die mindestens eine Düse in Richtung des Zielobjekts
   - einen Flussmesser zum Bestimmen des Sprühmittelflusses
   - einen Abstandssensor zur Ermittlung des Sprühabstandes zwischen der mindestens einen Düse und dem Zielobjekt
   - Mittel zur Bestimmung der Geschwindigkeit des Nutzers
   - einen oder mehrere Signalgeber
   - Mittel zur Erfassung und Auswertung des Sprühmittelflusses, der Geschwindigkeit des Nutzers und des Sprühabstandes,
   - Mittel zur Steuerung eines oder mehrerer Signalgeber, wobei diese Mittel so konfiguriert sind, dass sie den einen oder die mehreren Signalgeber veranlassen, dem Nutzer ein oder mehrere Signale zu geben, wenn ein oder mehrere Applikationsparameter von vordefinierten Werten abweichen.
2. Das System gemäß der Ausführungsform 1, wobei das System so konfiguriert ist, dass es einen oder mehrere Signalgeber veranlasst, dem Nutzer ein akustisches, visuelles und/oder taktiles Signal zu geben, wenn der Sprühabstand außerhalb definierter Grenzen liegt.
3. Das System gemäß der Ausführungsform 1 oder 2, wobei das System so konfiguriert ist, dass es einen oder mehrere Signalgeber veranlasst, dem Nutzer ein akustisches, visuelles und/oder taktiles Signal zu geben, wenn die Geschwindigkeit des Nutzers außerhalb definierter Grenzen liegt.
4. Das System gemäß der Ausführungsform 1, 2 oder 3, wobei das System so konfiguriert ist, dass es einen oder mehrere Signalgeber veranlasst, dem Nutzer ein akustisches, visuelles und/oder taktiles Signal zu geben, wenn der Sprühmittelfluss außerhalb definierter Grenzen liegt.
5. Das System gemäß einer der Ausführungsformen 1 bis 4, wobei das System so konfiguriert ist, dass es den Sprühmittelfluss automatisch an die Geschwindigkeit des Nutzers anpasst, um einen definierte Auftragsmenge an Sprühmittel zu erzielen.
6. Das System gemäß einer der Ausführungsformen 1 bis 5, wobei das System mindestens einen Generator für elektrische Energie umfasst, der elektrische Energie für die Versorgung zumindest eines Teils der elektrisch betriebenen Komponenten des Systems bereitstellt.
7. Das System gemäß einer der Ausführungsformen 1 bis 6, wobei es sich bei dem Mittel zum Fördern des Sprühmittels aus dem Behälter durch die mindestens eine Düse in Richtung des Zielobjekts um eine handbetriebene Pumpe handelt, wobei das System ferner über einen Generator für elektrische Energie verfügt, der beim Betrieb der Pumpe angetrieben wird.
8. Ein System umfassend
   - einen Behälter zur Aufnahme eines Sprühmittels
   - Mittel zum Tragen des Behälters durch einen Nutzer
   - mindestens eine Düse zur Applikation des Sprühmittels auf ein Zielobjekt
   - Mittel zum Fördern des Sprühmittels aus dem Behälter durch die mindestens eine Düse in Richtung des Zielobjekts
   - einen Flussmesser zum Bestimmen des Sprühmittelflusses
   - einen Abstandssensor zur Ermittlung des Sprühabstandes zwischen der mindestens einen Düse und dem Zielobjekt
   - Mittel zur Bestimmung der Geschwindigkeit des Nutzers
   - einen oder mehrere Signalgeber
   - Mittel zur Erfassung und Auswertung des Sprühmittelflusses, der Geschwindigkeit des Nutzers und des Sprühabstandes,
   - Mittel zur Steuerung eines oder mehrerer Signalgeber, wobei diese Mittel so konfiguriert sind, dass sie den einen oder die mehreren Signalgeber veranlassen, dem Nutzer ein oder mehrere Signale zu geben, wenn ein oder mehrere Applikationsparameter von vordefinierten Werten abweichen.
9. Ein tragbares Sprühgerät umfassend
   - Mittel zum Tragen des Sprühgeräts durch einen Nutzer
   - einen Behälter zur Aufnahme eines Sprühmittels
   - mindestens eine Düse zur Applikation des Sprühmittels auf ein Zielobjekt
   - Mittel zum Fördern des Sprühmittels aus dem Behälter durch die mindestens eine Düse in Richtung des Zielobjekts
   - einen Flussmesser zum Bestimmen des Sprühmittelflusses
   - einen Abstandssensor zur Ermittlung des Sprühabstandes zwischen der mindestens einen Düse und dem Zielobjekt
   - einen oder mehrere Signalgeber
   wobei das Sprühgerät so hergerichtet ist, dass es mit einem separaten mobilen Computersystem in der Weise zusammenwirkt, dass es den Sprühmittelfluss und den Sprühabstand an das separate mobile Computersystem übermittelt und das separate mobile Computersystem den einen oder die mehreren Signalgeber veranlasst, dem Nutzer ein oder mehrere Signale zu geben, wenn der Sprühmittelfluss und/oder der Sprühabstand von vordefinierten Werten abweichen.
10. Das Tragbare Sprühgerät gemäß der Ausführungsform 9, wobei es sich bei dem Mittel zum Fördern des Sprühmittels aus dem Behälter durch die mindestens eine Düse in Richtung des Zielobjekts um eine handbetriebene Pumpe handelt, wobei das Sprühgerät ferner über einen Generator für elektrische Energie verfügt, der beim Betrieb der Pumpe angetrieben wird.

Die Erfindung wird nachfolgend anhand eines Beispiels näher erläutert, ohne die Erfindung auf die in dem Beispiel beschriebenen Merkmale beschränken zu wollen.

Figur 1 zeigt eine bevorzugte Ausführungsform des erfindungsgemäßen Systems. Das System umfasst ein erfindungsgemäßes Sprühgerät (100) und ein separates mobiles Computersystem (200), das als Smartphone ausgeführt ist. Das Sprühgerät (100) umfasst einen Behälter (110) zur Aufnahme eines Sprühmittels. Über einen flexiblen Schlauch (141) ist der Behälter (110) mit einem Düsenhalter (140) verbunden. Der Düsenhalter (140) ist als Lanze ausgeführt, an dessen einem Ende eine Düse (145) vorhanden ist. Zusätzlich verfügt der Düsenhalter über einen Greifhebel (142), mit dem ein Ventil geöffnet und geschlossen werden kann, um die Abgabe von Sprühmittel über die Düse (145) zu starten oder zu stoppen. Das Sprühmittel wird mittels einer handbetriebenen Pumpe (170) aus dem Behälter (110) in Richtung Düse (145) gefördert. Die Pumpe (170) wird über den Hebel (175) betrieben. Beim Betrieb der Pumpe (170) über den Hebel (175) wird zusätzlich ein Generator (180) betrieben, um elektrische Energie zu erzeugen. Ein Flussmesser (120) erfasst die pro Zeiteinheit aus dem Behälter (110) in Richtung Düse (145) geförderte Menge an Sprühmittel. Mit einem Abstandssensor (150) kann der Abstand zwischen Düse und Zielobjekt ermittelt werden. Die Sensoren sind mit einer Computereinheit (130) verbunden (die Verbindungen sind in der Figur nicht gezeigt). Die Computereinheit (130) wiederum kann mit dem mobilen Computersystem (200) verbunden werden (dargestellt durch die gestrichelte Linie). Die mobile Computereinheit verfügt über einen GPS-Sensor und einen Zeitmesser, mit denen die Position und Geschwindigkeit eines Nutzers ermittelt werden können.

## Patentansprüche

1. Verfahren umfassend die Schritte
- Bewegen eines tragbaren Sprühgeräts durch ein Zielgebiet durch einen Nutzer
- Richten mindestens einer Düse auf ein Zielobjekt
- Fördern eines Sprühmittels aus dem Sprühgerät durch die mindestens eine Düse auf das Zielobjekt
- Bestimmen des Sprühabstandes zwischen der mindestens einen Düse und dem Zielobjekt
- Bestimmen der Geschwindigkeit des Nutzers
- Bestimmen des Sprühmittelflusses.

2. Verfahren nach Anspruch 1, wobei ein oder mehrere Signale erzeugt werden, wenn der Sprühabstand und/oder der Sprühmittelfluss und/oder die Geschwindigkeit des Nutzers außerhalb definierter Grenzen liegt/liegen.

3. Verfahren nach einem der Ansprüche 1 oder 2, wobei der Nutzer den Fluss des Sprühmittels mittels einer handbetriebenen Pumpe steuert, wobei durch die Pumpbewegung ein Generator angetrieben wird, der elektrische Energie zur Versorgung zumindest eines Teils der elektrisch betriebenen Komponenten des Sprühgeräts erzeugt.

4. Verfahren nach Anspruch 1 zum Kalibrieren eines tragbaren Sprühgeräts, ferner umfassend die Schritte
- Bestimmen der Sprühbreite durch Ausmessen der Breite des besprühten Zielobjekts
- Berechnen eines Wertes oder eines Wertebereichs für einen applikationsspezifischen Parameter auf Basis der bestimmten Bewegungsgeschwindigkeit, des Sprühmittelflusses und/oder der Sprühbreite.

5. Verfahren nach einem der Ansprüche 1 bis 3,
wobei das tragbare Sprühgerät umfasst:
- Mittel zum Tragen des Sprühgeräts durch einen Nutzer
- einen Behälter zur Aufnahme des Sprühmittels
- mindestens eine Düse zur Applikation des Sprühmittels auf das Zielobjekt
- Mittel zum Fördern des Sprühmittels aus dem Behälter durch die mindestens eine Düse in Richtung des Zielobjekts
- einen Flussmesser zum Bestimmen des Sprühmittelflusses
- einen Abstandssensor zur Ermittlung des Sprühabstandes zwischen der mindestens einen Düse und dem Zielobjekt
- einen oder mehrere Signalgeber
wobei das Sprühgerät so hergerichtet ist, dass es mit einem separaten mobilen Computersystem in der Weise zusammenwirkt, dass es den Sprühmittelfluss und den Sprühabstand an das separate mobile Computersystem übermittelt und das separate mobile Computersystem einen oder mehrere Signalgeber veranlasst, dem Nutzer ein oder mehrere Signale zu geben, wenn der Sprühmittelfluss und/oder der Sprühabstand von vordefinierten Werten abweichen.

6. Verfahren nach Anspruch 5, wobei es sich bei dem Mittel zum Fördern des Sprühmittels aus dem Behälter durch die mindestens eine Düse in Richtung des Zielobjekts um eine handbetriebene Pumpe handelt, wobei das Sprühgerät ferner über einen Generator für elektrische Energie verfügt, der beim Betrieb der Pumpe angetrieben wird.

7. Computerprogrammprodukt, das in den Arbeitsspeicher eines mobilen Computersystems geladen werden kann und dort das Computersystem dazu veranlasst, folgende Schritte auszuführen:
- Empfangen eines Sprühabstandes zwischen mindestens einer Düse und einem Zielobjekt von einem Abstandsensor
- Empfangen einer Geschwindigkeit eines Nutzers
- Empfangen eines Sprühmittelflusses von einem Flussmesser
- Prüfen, ob der Sprühabstand, die Geschwindigkeit des Nutzers und/oder der Sprühmittelfluss von vordefinierten Werten abweichen,
- Veranlassen eines oder mehrerer Signalgeber zur Abgabe eines oder mehrerer Signale an einen Nutzer, um den Nutzer zu veranlassen, den Sprühabstand, die Geschwindigkeit und/oder den Sprühmittelfluss zu verändern, so dass eine vordefinierte Auftragsmenge an Sprühmittel erreicht wird.
